# EUROPEAN PATENT APPLICATION

(11) **EP 3 564 098 A1**
(43) Date of publication of application: **06.11.2019**
(21) Application number: 19172843.5
(22) Date of filing: 06.05.2019
(51) Int. Cl.: B62D 13/02, B62D 13/00

(54) **BI-DIRECTIONAL TRAILER**

(30) Priority: 04.05.2018 NL 2020881
(71) Applicant: B.V. Beco, 4131 NR Vianen (NL)
(72) Inventor: Groenendijk, Dennis, 4131 NR Vianen (NL); Stravers, Martin, 4131 NR Vianen (NL)
(74) Representative: Nederlandsch Octrooibureau

(57) **Abstract**

The invention provides a bi-directional trailer (1, 11) comprising:
- a drawbar (8) for connecting with a second trailer or a pulling vehicle, the shaft being pivotally connected to a chassis of the trailer;
- a steering transmission means (6, 16) connected to the drawbar and to a first turntable (3, 13) of a first wheel pair (2, 12) of the trailer;
- a rotation transmission mechanism (4, 14) connected to the first turntable and a second turntable (13, 3) of a second wheel pair (12, 2) of the trailer (1, 11), for transmitting the rotation of the first turntable to the second turntable in a predetermined rotation transmission ratio;
wherein
the steering transmission means comprises a steering rod and can be adjustably enabled or disabled and wherein the rotation transmission ratio can be inverted.

## Description

### Field of the invention

The invention relates to a trailer that can be pulled in two directions. The invention also relates to an assembly of a pulling vehicle and a plurality of such bi-directional trailers. The invention further relates to a pulling vehicle for bi-directional trailers.

### Background of the invention

Trailers can be connected one behind another, with a front trailer connected to a pulling vehicle such as a truck. Such trailers are known in the art and for example described in EP 0 925 963 A1 from the present applicant.

Trains or assemblies of up to 5 or even 10 trailers may be placed behind a pulling vehicle. When the pulling vehicle makes a turn, it is important that the trailing train of vehicles follows more or less the same path as the pulling vehicle, to avoid any obstacles that may be located to either side of the path followed by the pulling vehicle. With large trailers with two or four axles with corresponding wheel pairs, it is necessary, in order to follow the path of the pulling vehicle, that each wheel pair is steered accordingly.

When a train of trailers needs to reverse directions, the pulling vehicle has to pull the entire train in a half circle with a relatively wide radius, requiring a lot of free space.

Published patent application EP 1 205 375 A1 discloses a vehicle in which a sliding member is used influence the ratio of rotation between two wheel pairs of the vehicle. Another sliding member, between two connecting vehicles, is used to control rotation of wheel pairs of the two connecting vehicles. A drawback of this system is that a special type of coupling, one that includes the sliding member, is needed to connect the two connecting vehicles.

It is an objective of the invention to address the above drawbacks of prior art trailer assemblies.

### Summary of the invention

According to a first aspect, the invention provides a trailer comprising:
- a drawbar for connecting with a second trailer or a pulling vehicle, the shaft being pivotally connected to a chassis of the trailer;
- a steering transmission means connected to the drawbar and to a first turntable of a first wheel pair of the trailer;
- a rotation transmission mechanism connected to the first turntable and a second turntable of a second wheel pair of the trailer, for transmitting the rotation of the first turntable to the second turntable in a predetermined rotation transmission ratio;
wherein the steering transmission means can be adjustably enabled or disabled and wherein the rotation transmission ratio can be inverted. In an embodiment, the rotation transmission ratio is non-unitary. Inverting means that the reciprocal of the rotation transmission ratio is taken.

The applicant has found that, in order for a trailer to follow essentially the same path of the pulling vehicle, it is advantageous if the rotation of the turntable at the front of the trailer exceeds the rotation of the second turntable at the rear of the trailer. This can be achieved by a non-unitary (not one-to-one) rotation transmission ratio between the these turntables. When the direction of the trailer is inverted, the rotation transmission ratio is then inverted as well, so that, when being pulled in the opposite direction the trailer still follows the pulling vehicle.

That is, by inverting the rotation transmission and enabling the steering transmission means on one side of the trailer (the side that is now being pulled) while disabling it on the other side of the trailer (the rear end, which may be pulling another trailer), the pulling direction can be reversed, while each wheel pair of the trailer will still steer to make the trailer generally follow the path of the pulling vehicle.

In an embodiment, the rotation transmission ratio is continuously variable, through the rotation transmission mechanism, from e.g. *1*/*R* to *R,* where *R* is the maximum required ratio between the two turntables. The maximum required ratio *R* will generally depend on the length of the trailer and the position of the turntables along said length. In another embodiment, the rotation transmission is discretely switchable between *1*/*R* and *R.*

In an embodiment according the invention, the steering transmission means comprises a steering rod. In an embodiment according the invention, the steering rod is a cylinder having a free-run mode and a fixed mode. Other means are also possible. For example, it is possible to use a rigid, fixed-length, steering rod while making a connecting pivot arm between the steering rod and the drawbar selectively pivotal and fixed. In the pivotal mode, the pivot arm connected to the steering rod is allowed to move freely, without transferring any force to the steering rod, thus disabling the steering transmission. In the fixed mode, the steering transmission is enabled.

In an embodiment according the invention, the steering transmission means can be adjustably enabled or disabled through an actuator device, e.g. one of an electric engine, an hydraulic cylinder and a pressure accumulator.

In an embodiment according the invention, the transmission from the first turntable to the second turntable is effected through a steering rod with adjustable connection positions on the first turntable and adjustable connection positions on the second turntable. By changing the connection positions, the rotation transmission ratio can be varied. By switching around the connection positions of the steering rod on either side of the rod, the rotation transmission ratio is inverted. That way, the correct rotation transmission ratio can be selected depending on the desired direction of movement, in order to ensure that the trailer follows the path of the pulling vehicle.

In an embodiment according the invention, the steering rod is movable from a first connection position on the first turntable to a second connection position by a position driving means or actuator device. In an embodiment according the invention, the position driving means is one of an electric engine, an hydraulic cylinder and a pressure accumulator.

In an embodiment according the invention, the trailer comprises two turntables and corresponding wheel pairs (also known as a two axle trailer). In an embodiment according the invention, the trailer comprises (at least) four turntables and corresponding wheel pairs (four axle trailer).

In an embodiment according the invention, a third and a fourth turntable are located between the first and the second turntable, and wherein a second rotation transmission mechanism connects the first and the third turntable and a third rotation transmission mechanism connects the fourth and the second turntable. In an embodiment according the invention, a second rotation transmission ratio of the second rotation transmission mechanism can be inverted and a third rotation transmission ratio of the third rotation transmission mechanism can be inverted. In an embodiment according the invention, the second and the third rotation transmission mechanisms are formed by a second and a third steering rod.

In an embodiment according the invention, the trailer comprises means for receiving configuration information from a connected pulling trailer or pulling vehicle and means for transmitting the configuration information to a connected pulled trailer.

The invention further provides an assembly of a pulling vehicle and a plurality of trailers as described above. The invention also provides a pulling vehicle configured to transmit configuration information to a pulled trailer as described.

### Brief description of the Figures

Embodiments of the present invention will be described hereinafter, by way of example only, with reference to the accompanying drawings which are schematic in nature and therefore not necessarily drawn to scale. Furthermore, like reference signs in the drawings relate to like elements.
Figure 1 schematically shows two connected trailers, configured for towing in a first direction, according to an embodiment of the invention;
Figure 2 schematically shows two connected trailers, configured for towing in an opposite direction, according to an embodiment of the invention;
Figure 3 schematically shows a top view of a four axle trailer according to an embodiment of the invention; and
Figure 4 schematically shows a side view of a four axle trailer according to an embodiment of the invention.

### Detailed description

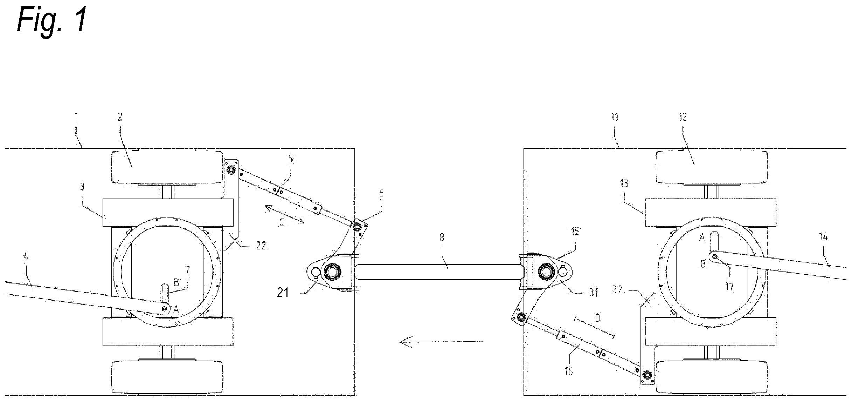

Figure 1 schematically shows a part of two connected trailers 1 and 11, configured for towing in a first direction indicated by the arrow, according to an embodiment of the invention. The rear part of trailer 1 is shown and the front part of trailer 11, using the direction of movement to define the relative terms front and rear. Each trailer 1, 11 comprises a chassis and two axles with wheel pairs 2, 12. Each wheel pair 2, 12 is connected to a turntable 3, 13 which can be rotated to steer the wheel pair 2, 12.

In figure 1, trailer 1 is pulling trailer 11 through the drawbar 8. The drawbar 8 is pivotally connected to pivot point 21 on trailer 1 and pivot point 31 on trailer 11. The drawbar is preferably connected to either trailer 1, 11 using one or more cardan or universal joints, to allow some flexibility when the trailer assembly is moving over uneven terrain. An axial rotation joint in the middle of drawbar 8 (not shown) may be used to prevent torque strains.

The drawbar is connected, rigidly or preferably through a cardan joint, with a pivot arm 5 on trailer 1 and another pivot arm 15 on trailer 11. Each pivot arm 5, 15 is connected to a cylinder 6, 16 which is in turn connected to turntable arm 22, 32. The turntable arm 22, 32 is attached to respective turntables 3, 13 so that when the cylinder 6, 16 pushes or pulls the turntable arm 22, 32, the turntable 3, 13 turns along with the wheel pair 2, 12.

Each cylinder 6, 16 can be in one of two modes. In a first mode, the cylinder 6 can freely move so that its length can change (in this mode, the cylinder 6 will not transfer any push/pull forces along its length between the pivot arm 5 and the turntable arm 22). In a second mode, the cylinder has a fixed length (for example, at a midpoint of the cylinder's available range). In this mode, the cylinder will transfer any push/pull forces along its length between the pivot arm 5 and the turntable arm 22.

In an embodiment, the cylinder 6, 16 is changed mechanically between the first and the second mode, e.g. by fastening or loosening a bolt. In a further embodiment, the cylinder 6, 16 is provided with cylinder actuation means, such as an electric motor or hydraulic mechanism, that can effect the transition between the first and the second mode. In an embodiment, the cylinder actuation means can be remote controlled from a central point (for example, the pulling vehicle), so that a number of cylinders in an assembly of trailers can be adjusted simultaneously.

Turntable 3 of trailer 1 is connected to a second turntable (not shown in figure 1) of trailer 1 through steering rod 4. The connection of steering rod 4 to the second (not shown) turntable is identical to the depicted connection of steering rod 14 of trailer 11 to turntable 13 of trailer 11. The point where steering rod 4 is connected to turntable 3 is adjustable from position A to position B. Likewise, the point where steering rod is connected to the second turntable is adjustable form position B to position A (as shown on turntable 13 of trailer 11). In figure 1, steering rod 4 is in position A of turntable 3 and in position B (closer to the centre) of the second turntable. Likewise, steering rod 14 of trailer 11 is in position B at turntable 13 and in position A at the second (not shown) turntable of trailer 11.

By adjusting the position of the ends of the rod on one side from A to B and on the other side from B to A, the rotation transmission ratio is inverted. Because the connection points A, B of the turntables 3, 13 are at opposite sides, the turntables will turn in opposite directions. That way, when the front wheels turn to the left, the rear wheels will turn to the right, allowing the trailer to follow an arc.

For example, if in figure 1 turntable 13, where steering rod 14 is in position B, turns *X* degrees to the left (under the influence of fixed mode cylinder 16), the second turntable of trailer 11 (not shown) where the steering rod 14 is in position A, may turn X/R degrees to the right, giving a ratio of first turntable / second turntable of *R.* When the steering rod 14 is moved to position A in turntable 13 and to position B in the second turntable, then the rotation transmission ratio is inverted, so that the ratio first turntable / second turntable equals *1*/*R.* It is noted that the explanation involving rotation transmission ratios is mainly for the purposes of understanding and should not be construed in a rigorous mathematical way. In general, the rotation transmission between the first and second turntable is not one-to-one (in order to better follow the path of the pulling vehicle) and said rotation transmission can be inverted when the direction is inverted.

In an embodiment, each of the turntables 3, 13 are provided with steering rod actuation means that can move the steering rods 4, 14 between positions A and B. In an embodiment, the steering rod actuation means are synchronized so that at any time one end of steering rod 4, 14 is in position A and the other end is in position B. In an embodiment, the steering rod actuation means can be remote controlled from a central point (for example, the pulling vehicle), so that the turntable positions of a number of steering rods 4, 14 in an assembly of trailers can be adjusted simultaneously.

In figure 1, cylinder 6 is in the free mode C, while cylinder 16 is in the fixed mode D. Steering rod 4 is in position A of turntable 3 and in position B in the second turntable, while steering rod 14 is in position B of turntable 13 and in position A of the second turntable of trailer 11. In this configuration, which corresponds to a drive direction in the direction of the arrow, when trailer 1 is turning left or right, the drawbar will pivot around pivot point 31 and move pivot arm 15 along with it. Pivot arm 15 in turn will push or pull the fixed cylinder 16 which transfers the movement to turntable arm 32, turning said turntable and wheel pair 12 along with it. In this manner, a turning of the trailer 1 is transferred to the front wheel pair 12 of trailer 11 that is pulled along by trailer 1.

Meanwhile, the turning of trailer 1 also moves pivot arm 5, but that movement is not transferred to turntable arm 22 and turntable 3 because cylinder 6 is in free mode. The turning of turntable 3 is governed by the movement of the drawbar 4. The front wheel pair (not shown) of trailer 1 is rotated, and that rotation is transferred to the rear wheel pair 2 by steering rod 4. The steering rod 4 thus acts as an rotation transmission mechanism between the two turntables of trailer 1. Because one end of steering rod 4 is in position A and the other end is in position B and both positions are not at equal distance from the centre of the respective turntable, the rotation transmission ratio is not one, but in fact less than one. That is, the front wheel pair (where steering rod 4 is in position B) will turn more than the rear wheel pair 2 (where steering rod 4 is in position A of turntable 3) because position B is closer to the centre of the turntable than position A.

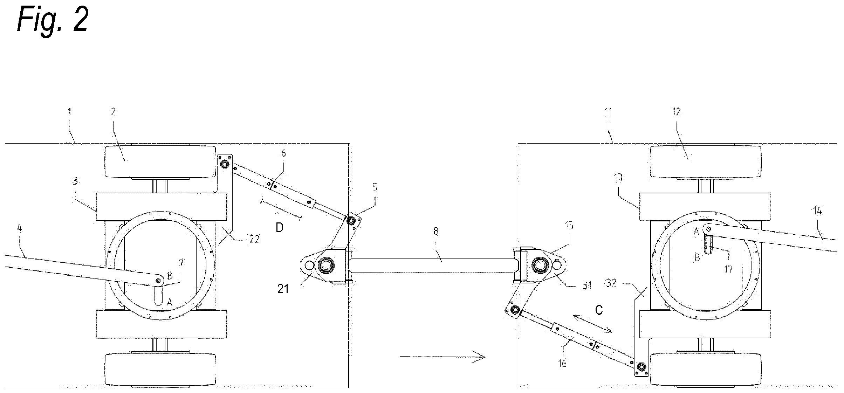

There are various ways in which the rotation transmission mechanism can be implemented. One way is through the steering rods 4 and 14 shown in figures 1 and 2, with positions A and B at either end of a slit 7, 17. An hydraulic, pressurized or electric mechanism can be used to shift the ends of steering rod 4 to either position. These mechanisms can be remote controlled, for easy adjusting of a number of trailers simultaneously.

However, a steering rod 4, 14 is not the only way in which the mechanism can be formed. A gear-box type mechanism can also be used. It is also possible to provide both turntables with an electrically driven rotation engine and sensor, which can be centrally controlled to apply any desired ratio. For example, a sensor at the front turntable senses the rotation as *X* degrees and instructs the rotation engine at the rear turntable to rotate by *X*/*R* degrees (where typically *R>1*)*.* Again, the rotation does not have to be determined through a division by a constant ratio R. Any mathematical or tabulated formula can be used to calculate the desired rotation based on the sensed rotation of the other turntable. When the direction is reversed, the positions of front and rear turntables is reversed as well, and the turntable that was sensing the rotation is now applying it and vice versa. In fact, any mechanism for transmitting rotations between turntables 3 and 13 can be used provided that the ratio of transmissions can be reversed when the direction of movement is reversed.

The rotation transmission ratio is chosen to make sure that trailer 1 stays in the same path as the vehicle or other trailer that is pulling trailer 1. Likewise, the length of cylinder 16 in fixed mode is chosen so that the turning of the trailers will cause a rotation of the front wheel pair 12 of trailer 11 that is the same as the rotation of the front wheel pair of trailer 1. In that manner, when the pulling vehicle makes a turn, this turn will be transferred backwards to each pulled trailer and will cause the front and rear wheel pairs of each trailer to steer accordingly, wherein for each trailer the front wheel pair rotates more than the rear wheel pair.

In an alternative embodiment, it is possible to use a rigid, fixed-length, steering rod 6, 16, instead of a variable length cylinder, while making the connecting pivot arm 5, 15 between the steering rod 6, 16 and the drawbar 8 selectively pivotal (around pivot point 21, 31) and fixed. In the pivotal mode, the pivot arm 5, 15 connected to the steering rod 6, 16 is allowed to move freely, without transferring any force to the steering rod, thus disabling the steering transmission. In the fixed mode, the steering transmission is enabled.

In a further alternative embodiment, the steering transmission means is implemented through a chain connecting a wheel through pivot point 21, 31 to the turntable 3, 13. The chain has two modes, one free-run mode in which rotation of the wheel around the pivot point is independent of rotation of the turntable, and one fixed mode in which said rotation is transferred to the turntable.

Figure 2 again schematically shows two connected trailers 1, 11, configured for towing in an opposite direction indicated by the arrow, according to an embodiment of the invention. Compared to figure 1, a number of configurations are now reversed. Trailer 11 (the rear is shown) is now pulling trailer 1 (of which the front is shown), and cylinder 6 is in fixed mode D (so that the turning of trailer 11 with respect to trailer 1 will cause a rotation of turntable 3 of trailer 1) while cylinder 16 is in free mode C. Steering rod 14 is in position A of the turntable 13 of the rear wheel pair 12 of trailer 11, and steering rod 4 is in position B of turntable 3 of front wheel pair 2 of trailer 1. Note that, compared to figure 1, the notions of front and rear wheel pairs are now reversed (wheel pair 2 is now the front wheel pair of trailer 1 and wheel pair 12 is the rear wheel part of trailer 11). Because the positions of the steering rods 14 is also reversed, there is still the effect that the front wheel pairs of each trailers turn more than the rear wheel pairs when the trailers are pulled through a curve. In fact, the entire situation is reversed with respect to figure 1, so that the train moves in the same manner as described in reference to figure 1, but in the opposite direction.

According the invention, the direction of a train of trailers can be reversed by reversing the position of all steering rods and modes of all cylinders. Then, by simply moving the pulling vehicle to the other end of the train of trailers (or by having two pulling vehicles at either end, one of which is active while the other is in neutral gear) the train of trailers can be pulled in the opposite direction. This requires much less space than prior art trailer assemblies, which must make a half circle in order to change directions.

In an embodiment, rotation transmission mechanism 4, 14 can be selectively disabled (so that turntables 3 and 13 are no longer following each other's rotation) while the rear turntable (i.e. turntable 3 in figure 1 and turntable 13 in figure 2) is fixed in the central position. In this mode, the front turntable of each trailer is still rotating under the influence of the enabled steering transmission means, but the rear turntable remains in the central position. Due to the lack of steering of the rear wheel pair, the trailer then loses some of its path following properties. The gain is an increased stability at higher speeds, since applicant has found experimentally that at higher speeds the steering by all wheel pairs can sometimes cause instabilities. Thus, by making this a selectable mode, an assembly of trailer trains can be used for travel at relatively high speeds over generally straight paths, as well as for travel at moderate speeds over paths with curves.

As a practical implementation, the rotation transmission mechanism can be selectively disabled by making the steering rod 4, 14 flexible. For example, a segment of the steering rod 4, 14 can be cylinder similar to the cylinder 6, 16 with two modes. In the fixed mode of the additional cylinder in steering rod 4, 14, the steering rod 4, 14 can vary its length freely and rotation transmission between the turntables 3, 13 is disabled. In the fixed mode, rotation transmission is enabled.

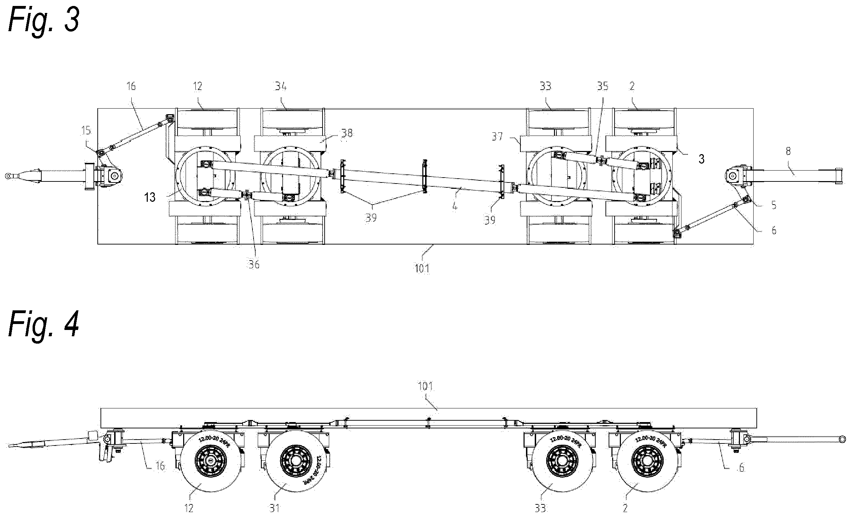

Figure 3 schematically shows a top view of a four axle trailer 101 according to an embodiment of the invention, and figure 4 shows a corresponding side view. Compared to the two-axle trailers of figures 1 and 2, in figures 3 and 4 there are now two groups of two axles with wheel pairs. Wheel pairs 12 and 34 form a first pair, and wheel pairs 33 and 2 form a second pair. In the embodiment of figure 2, wheel pairs 12 and 2 are again connected through steering rod 4 (supported by guides 39), while wheel pairs 12 and 34 are connected through a second steering rod 36 and wheel pairs 33 and 2 are connected through a third steering rod 35. That is, the two outermost wheel pairs 2 and 12 are connected through steering rod 4, and within each pair of wheel pairs there are additional steering rods 35, 36. This is, however, merely an example.

In principle, any combination of connections through rotation transmission means (such as the steering rods of figures 1-4) can be used, as long as each wheel pair 12, 34, 33, 2 is connected to another wheel pair and at least one wheel pair is connected to a cylinder 6, 16 (or other steering transmission means) for transmitting a turning of the trailer to the wheel pair. In the embodiment of figures 3 and 4, each of the additional steering rods 35, 36 also has an invertible or generally adjustable transmission ratio. The same inversion or adjustment mechanism can be used as for the (main) steering rod 4.

As a practical example, if the trailer of figure 3 is being pulled to the left and into a turn, then pivot arm 15 and cylinder 16 (in fixed position) will cause turntable 13 and wheel pair 12 to turn e.g. *X* degrees. Steering rod 36 will then cause turntable 38 and wheel pair 34 to turn *X*/*R₃₆* degrees, where *R₃₆* is the rotation transmission ratio corresponding to the positions of steering rod 36, while main drawbar 4 will cause turntable 3 and rear wheel pair 2 to turn *X*/*R* degrees in the opposite direction (here *R* is again the rotation transmission ratio of main drawbar 4). Finally, steering bar 35 will turn turntable 37 and wheel pair 33 to turn by *X*/(*R·R₃₅*)*,* where *R₃₅* is the rotation transmission ratio of steering rod 35. Cylinder 6 is now in the free-run or loose mode and thus imparts no force on drawbar 8.

Conversely, when the trailer is being pulled to the right and into a turn, the rotation transmission ratios will be reversed, as will the fixed/free modes of cylinders 6 and 16. Then, cylinder 6 causes front wheel pair 2 to turn *X* degrees, wheel pair 33 turns *X*/*R₃₅* degrees, rear wheel pair 12 turns *X*/*R* degrees in the opposite direction as wheel pair 2 and 33, and finally second-to-rear wheel pair 34 turns *X*/*(R·R₃₆)* degrees in the same direction as wheel pair 12. Cylinder 16 is in free-run mode. If the trailer is entirely symmetrical with respect to a rotation over 180 degrees around a vertical through the plane of figure 3, or at least when the axle positions are symmetrically arranged, then *R₃₅* = *R₃₆.* Also, in order to ensure path following properties of the trailer, typically *R* > 1. Also, typically *R₃₅* > 1 and *R₃₆* > 1.

In general, going from the front wheel pair of a trailer to the rear wheel pair, each subsequent wheel pair turns a somewhat differently than the previous one. The first (front) wheel pair is turned by the steering transmission mechanism transmitting the turning of the pulling drawbar. By having each subsequent wheel pair turn by a certain amount, each trailer in the train follows essentially the same path as the pulling vehicle. The exact ratios to be used are determined by the length of the trailer, the positions of the wheel pair axles along that length and the arc that the trailer's wheel pairs are meant to follow.

As is clear from figure 3, in an embodiment the trailer is entirely symmetrical with respect to a rotation along 180 degrees along an axis perpendicular to the plane of the drawing of figure 3. Without the configuration of the steering transmission means and the rotation transmission mechanism, there is no preferred front or rear direction in the trailer.

As has been mentioned before, in an embodiment the actuators of the steering transmissions means (e.g. the cylinders 6, 16 with two modes) and the actuators of the rotation transmission mechanisms (e.g. the steering rods 4, 14) can be remote controlled. It is particularly advantageous if these actuators are centrally controlled through a processing unit in such a manner that all steering transmission means and rotation transmission mechanisms are configured in a consistent way.

That is, in the embodiment of figures 1 and 2, within each trailer the front (depending on the intended direction) cylinder should be in the fixed mode and the trailing cylinder in the free mode. Meanwhile, the front end of steering rod 4 should be in position B (closest to centre) while the rear end should be in position A. The configuration should be the same for every trailer in the train. There are thus only two valid configurations possible (one per direction) and the processing unit can be programmed to exclude all other configurations to prevent dangerous situations.

In an embodiment, each trailer is configured to receive the desired configuration from the trailer or pulling vehicle in front of it, to apply it to its own settings, and to pass it on to the trailer at its rear end (if not the last trailer in the train). This channel of communication can also be used to send diagnostic information or warning signals to the pulling vehicle.

The use of a processing unit to control the various actuators is in particular advantageous in combination with the earlier mentioned embodiment in which the rotation transmission mechanism can be selectively disabled and the rear turntable locked to allow travel at higher speeds. The processing unit can determine whether or not this high speed mode should be engaged depending on the speed of the pulling vehicle, and control the actuators accordingly. In this embodiment, there are additional actuators to enable/disable the rotation transmission mechanisms and to lock rear turntables in the central position.

In the foregoing description of the figures, the invention has been described with reference to specific embodiments thereof. It will, however, be evident that various modifications and changes may be made thereto without departing from the scope of the invention as summarized in the attached claims.

In addition, many modifications may be made to adapt a particular situation or material to the teachings of the invention without departing from the essential scope thereof. Therefore, it is intended that the invention not be limited to the particular embodiments disclosed, but that the invention will include all embodiments falling within the scope of the appended claims.

The principle of 2 and 4 axle trailers shown in figures 1-4 can be generalized to any number of two or more axles.

In particular, combinations of specific features of various aspects of the invention may be made. An aspect of the invention may be further advantageously enhanced by adding a feature that was described in relation to another aspect of the invention.

It is to be understood that the invention is limited by the annexed claims and its technical equivalents only. In this document and in its claims, the verb "to comprise" and its conjugations are used in their non-limiting sense to mean that items following the word are included, without excluding items not specifically mentioned. In addition, reference to an element by the indefinite article "a" or "an" does not exclude the possibility that more than one of the element is present, unless the context clearly requires that there be one and only one of the elements. The indefinite article "a" or "an" thus usually means "at least one".

## Claims

1. Trailer (1, 11) comprising:
- a drawbar (8) for connecting with a second trailer or a pulling vehicle, the shaft being pivotally connected to a chassis of the trailer;
- a steering transmission means (6, 16) connected to the drawbar and to a first turntable (3, 13) of a first wheel pair (2, 12) of the trailer;
- a rotation transmission mechanism (4, 14) connected to the first turntable and a second turntable (13, 3) of a second wheel pair (12, 2) of the trailer (1, 11), for transmitting the rotation of the first turntable to the second turntable in a predetermined rotation transmission ratio;
wherein the steering transmission means can be adjustably enabled or disabled and comprises a steering rod, and
wherein the rotation transmission ratio can be inverted.

2. Trailer according to claim12, wherein the steering rod (6, 16) is a cylinder having a free-run mode (C) and a fixed mode (D).

3. Trailer according to any one of the preceding claims, wherein the steering transmission means can be adjustably enabled or disabled through one of an electric engine, an hydraulic cylinder and a pressure accumulator.

4. Trailer according to any one of the preceding claims, wherein the transmission from the first turntable to the second turntable is effected through a steering rod (4, 14) with adjustable connection positions (A, B) on the first turntable and adjustable connection positions (B, A) on the second turntable.

5. Trailer according to claim 4, wherein the steering rod (4, 14) is movable from a first connection position (A,B) on the first turntable to a second connection position (B,A) by a position driving means.

6. Trailer according to claim 5, wherein the position driving means is one of an electric engine, an hydraulic cylinder and a pressure accumulator.

7. Trailer according to any one of the preceding claims, comprising two turntables (3, 13) and corresponding wheel pairs (2, 12).

8. Trailer according to any one of the preceding claims 1-6, comprising at least four turntables (3, 37, 38, 13) and corresponding wheel pairs (2, 33, 34, 12).

9. Trailer according to claim 8, wherein a third (37) and a fourth (38) turntable are located between the first (3) and the second (13) turntable, and wherein a second rotation transmission mechanism (35) connects the first and the third turntable and a third rotation transmission mechanism (36) connects the fourth and the second turntable.

10. Trailer according to claim 9, wherein a second rotation transmission ratio of the second rotation transmission mechanism can be inverted and a third rotation transmission ratio of the third rotation transmission mechanism can be inverted.

11. Trailer according to any one of the preceding claims 9-10 wherein the second and the third rotation transmission mechanisms are formed by a second and a third steering rod.

12. Trailer according to any one of the preceding claims comprising a means for receiving configuration information from a connected pulling trailer or pulling vehicle and means for transmitting the configuration information to a connected pulled trailer.

13. Trailer according to any one of the preceding claims wherein the rotation transmission mechanism can be selectively enabled and disabled.

14. Assembly of a pulling vehicle and a plurality of trailers according to any one of the claims 1 - 13.

15. Pulling vehicle comprising a processing unit configured to transmit configuration information to a pulled trailer according to any one of the preceding claims 1-13.
